# EUROPEAN PATENT SPECIFICATION

(11) **EP 1 649 715 B1**
(45) Date of publication and mention of the grant of the patent: **31.10.2007**
(21) Application number: 03817937.0
(22) Date of filing: 01.08.2003
(51) Int. Cl.: H04Q 7/38

(54) **INTER-DOMAIN HANDOVER**
WEITERREICHUNG ZWISCHEN DOMÄNEN
TRANSFERT INTER-DOMAINE

(43) Date of publication of application: 26.04.2006
(73) Proprietor: NTT DoCoMo INC., Chiyoda-ku Tokyo 100-6150 (JP)
(72) Inventor: HILLEBRAND, Joachim, 81379 München (DE); PREHOFER, Christian, 81477 München (DE); BLESS, Roland, 76187 Karlsruhe (DE)
(74) Representative: HOFFMANN EITLE
(86) International application number: PCT/EP2003/008562
(87) International publication number: WO 2005/015938

(56) References cited:
- WO-A-00/38465
- WO-A-01/65881
- WO-A-02/30132
- WO-A-98/59513
- WO-A-03/050976

## Description

### FIELD OF THE INVENTION

The invention relates to a method and mobile device for performing an inter-domain handover of a communication path from a first network domain to a second network domain.

### TECHNOLOGICAL BACKGROUND

Wireless communication networks are becoming increasingly popular and co-exist with or even replace traditional wire line communication networks. A wireless communication network allows a user to wirelessly transmit information to another user or device, such as for a telephone conversation between telephone terminals or a data communication between computing devices. A mobile telephone is one type of wireless communication device, which is widely used in voice and/or data communications. Similarly, a mobile computer is a type of Wireless communication device and is able to connect to a wireless communication network for data transmission and/or for assisting in voice communications.

A wireless communication network may have a cellular network structure, like mobile communication networks such as GSM (Global System for Mobile Communications) UMTS (Universal Mobile Telecommunications System), and similar. A cellular network is sub-divided into individual cells in order to more efficiently use the available frequency spectrum for wireless transmissions between mobile devices. The cells cover a given geographical area and may at least partially overlap one another.

When a mobile device engaged in a voice or data communication moves from one cell of the communication network into another cell of the communication network, a handover from between the cells performed, to handover the ongoing voice or data communication from one cell to another. As the individual cells of the communication network cover a larger geographical region, the wireless communication device can freely move within the coverage area of the network, without experiencing an interruption of an ongoing communication.

If, however, a mobile device moves beyond a coverage area of the network, communications can no longer be handled in this network or network domain, and a handover to a second network or network domain is necessary. This so-called inter-domain handover between two separate networks may thus occur between network domains with neighbouring geographical coverage areas. Moreover, inter-domain handovers may also occur between different network domains covering the same geographical region, e.g., if a first network domain experiences an overload condition or if a communication connection in the first network domain is bad or interrupted in which case it may be advisable to handover the communication operations from the first network domain to a second network domain.

For example, according to an inter-domain handover scheme, a mobile device could terminate a communication path between the mobile device and a first network domain, and thereafter connect to a second network domain, in order to establish a communication path to the second network domain. Generally, such an inter-domain handover could be initiated and controlled by the network control entities of the first and second network domain.

While handovers within one and the same network domain usually do not require a significant amount of a time, as the mobile device is already registered with the network domain and only moves from one cell of the domain to another, inter-domain handovers between two network domains may require a substantial amount of time, as the second network domain needs to register the mobile device including reserving appropriate resources or performing authentication operations to authenticate the mobile device.

The imposed time delay for an inter-domain handover may be acceptable in some non-real time services such as web-browsing, but such delays may not be acceptable in other applications such as real time communication applications or real time data communications. Further, a lengthy interruption the communications during an inter-domain handover may also cause a termination of the service altogether.

WO 00/38465 A describes an inter-system soft handover with an anchor system to set put the soft handoff with a target system based on sets of user plain attributes available for interfacing with the anchor system. In a handoff request operation multiple parameters are reported, for example call ID of the connection, user plain attribute, quality of servers value, channel identity, cell identifier list, etc.. The target system receives the handoff request operation and it is determined whether an acceptable set of parameters is offered by the anchor system for the soft handoff, i.e., it is checked whether the target system can support the indicated parameters. If the parameters are acceptable to the target system the target system sends a soft connection request to the anchor system and a connection is open. Then, the anchor system forwards user data frames to the target system, which are forwarded to the mobile station. Then, a handoff direction message is transmitted to the mobile station and the mobile station includes indicated target cells into an active set and returns a handoff completion message.

WO 01/65881 A describes an inter-system handover being based on a default set of parameters wherein current bearer attributes are mapped into sufficient values. The target switching center determines appropriate default values for the parameters and a communication path is established between the target switching center and the mobile station after initiation of the handover procedure. The actual handover is performed only after the required resources are reserved for the communication path between the mobile station and the target mobile switching center such that the connection between the mobile station and the target switching center is negotiated based on default values before the actual handover procedure. The mobile station may accept or reject the new parameters by responding to a transmission of the proposed parameters.

### SUMMARY OF THE INVENTION

It is therefore an object of the invention to provide for an inter-domain handover at reduced time delay.

This object of the invention is solved by a method of performing an inter-domain handover of a communication path from a first network domain to a second network domain, including transmitting a resource request from a mobile device to the first network domain, the resource request specifying communication resources required at the second network domain for handling the communication path, to instruct the first network domain to obtain information on the availability of the required communication resources, receiving a resource response at the mobile device from the first network domain, indicating whether the required communication resources are available at the second network domain, and initiating the handover from the first network domain to the second network domain by the mobile device, if the resource response indicates that sufficient communication resources are available at the second network domain.

The object of the invention is further solved by a mobile device for performing an inter-domain handover of a communication path from a first network domain to a second network domain, including: a request handler for transmitting a resource request from the mobile device to the first network domain, the resource request specifying communication resources required at the second network domain for handling the communication path, to instruct the first network domain to obtain information on the availability of the required communication resources, and for receiving a resource response from the first network domain indicating whether the required communication resources are available at the second network domain; and a handover handler for initiating the handover from the first network domain to the second network domain, if the resource response indicates that sufficient communication resources are available at the second network domain.

Accordingly, an inter-domain handover initiated by a mobile device becomes possible, where an availability of communication resources can be determined prior to the handover, i.e. while the communication path to the first network domain is still maintained. As the availability of resources at the second network domain is determined before carrying out the inter-domain handover, the time delay or interruption imposed by the handover can be reduced. Further, as the inter-domain handover is only performed if sufficient resources are available at the second network domain, the problem of a termination of the communication service in case of insufficient resources can be avoided.

Advantageously, the resource request may specify at least one of the required resources, a quality of service indication, an identifier of the second network domain and an identifier of the mobile device.

Further, the mobile device may discover a first domain resource manager of the first network domain, and forwards the resource request to the first domain resource manager; the first domain resource manager may process the resource request and forwards the resource request to a second domain resource manager of the second network domain; the second domain resource manager may check availability of the required resources and, if available, reserve the required resources and return a resource response to the first network domain; and the first network domain may transmit the resource response to the mobile device.

The first domain resource manager or the mobile device may perform operations to discover the second domain resource manager.

The method may include for authentication purposes transmitting an authentication request from the mobile device to the second network domain and exchanging an authentication signalling between the mobile device and the second network domain; and initiating the handover to the second network domain, if the mobile device is successfully authenticated.

Still further, at least one of the authentication request and the authentication signalling is transmitted to the second network domain through the first network domain. It may be determined whether the mobile device is authorized to use the requested communication resources at the second network domain. In an alternative, the authentication request may be transmitted from the mobile device to the first domain resource manager, instructing the first domain resource manager to transmit the authentication request to a second domain authentication manager of the second network domain.

Also, the first domain resource manager or the mobile device may perform operations to discover the second domain authentication manager.

The mobile device may receive the identity of the second domain authentication manager and transmit the authentication request to the second domain authentication manager.

Still further, the mobile device may transmit the authentication request to a first domain resource manager, instructing the first domain resource manager to identify a second domain resource manager and to forward the authentication request to the second domain resource manager, the second domain resource manager forwarding the authentication request to a second domain authentication manager.

The mobile device may transmit the resource request to the first network domain and the first network domain, based on the resource request, generate an authentication message and forward same to the second network domain, thus triggering required authentication operations.

The second domain resource manager, based on the resource request, may generate an authentication message and forward same to the a second domain authentication manager.

According to a further alternative, the operations for the resource reservation and the authentication of the mobile device toward the second network domain may be performed subsequently or concurrently. Also, the authentication request may request all information necessary for authenticating the mobile device toward the second domain and an authentication response may be transmitted from the second network domain to the mobile device in association with the resource response.

The mobile device may transmit a handover confirmation to the second domain resource manager may re-authenticate with a second domain authentication manager.

The mobile device may transmit an acknowledgement message to the first network domain, the acknowledgement message indicating a successful handover to the second network domain and may exchange re-authentication signalling with the second network domain after initiating the handover.

The re-authentication signalling may include transmitting a re-authentication message from the mobile device to the second domain authentication manager, directly or through the second domain resource manager.

The re-authentication signalling may be generated by the second domain resource manager or may be transmitted in association with resource reservation signalling between the mobile device and the second domain resource manager.

According to another embodiment, a program includes executable instructions which, when executed by computer devices, cause the computer devices to carry out any of the above operations. Further, a computer readable medium may embody where the program. Still further, a computer program product may comprise the computer readable medium.

Further advantageous embodiments of the invention are disclosed in further dependent claims.

### BRIEF DESCRIPTION OF THE DRAWINGS

- Fig. 1: illustrates elements of a system for performing an inter-domain handover according to an embodiment of the invention;
- Fig. 2: illustrates operations for performing an inter-domain handover according to an embodiment of the invention, particularly showing operations for resource reservation;
- Fig. 3: illustrates operations of a method for performing an inter-domain handover according to an embodiment of the invention, particularly showing operations for authenticating the mobile device;
- Fig. 4: illustrates elements of a system for performing an inter-domain handover according to another embodiment of the invention;
- Fig. 5: illustrates a time sequence of messages and operations for performing an inter-domain handover between a mobile device, a first domain resource manager, a second domain resource manager and a second domain authentication manager according to another embodiment of the invention;
- Figs. 6a - 6e: illustrate operations for authentication and resource reservation according to a further embodiment of the invention; and
- Figs. 7a - 7c: illustrate operations for resource reservation and re-authentication required for a handover according to another embodiment of the invention.

### DETAILED DESCRIPTION OF THE PREFERRED EMBODIMENTS

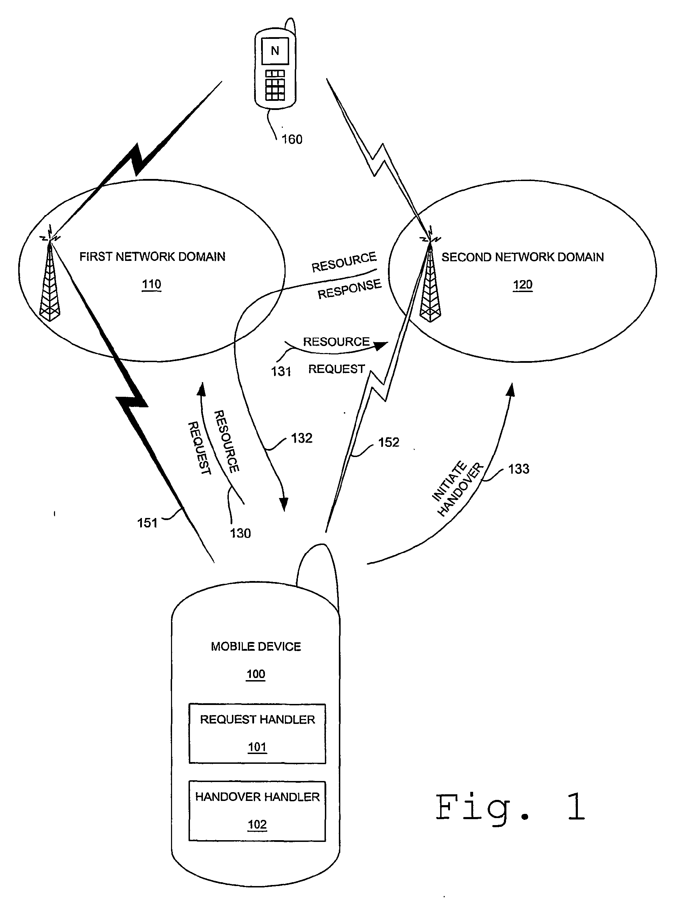

A first embodiment of the invention will be described with regard to Fig. 1.

Fig. 1 illustrates elements of a system for performing an inter-domain handover between a first network domain and a second network domain.

Fig. 1 illustrates a mobile device 100 comprising a request handler 101 and a handover handler 102. Further, Fig. 1 illustrates a first network domain 110 and a second network domain 120.

A first communication path 151 extends from the mobile device 100 through the first network domain 110 to a further communication device 160 and is assumed to carry an ongoing data or voice communication between the mobile device and the further communication device 160 prior to the inter-domain handover. Moreover, Fig. 1 illustrates a second communication path 152, dedicated to be carrying the communication between the mobile device 100 through the second network domain to the communication device 160 after the handover is performed.

The request handler 101 of the mobile device 100 is provided for transmitting a resource request from the mobile device to the first network domain, for instructing the first network domain to obtain information on the availability of communication resources at the second network domain for handling the communication path, and further, the request handler is provided for receiving a resource response indicating whether communication resources are available at the second network domain. The handover handler 102 of the mobile device is provided for initiating the handover to the second network domain, if the resource response indicates that sufficient communication resources are available at the second network domain.

Fig. 1 also illustrates the transmission of various signalling messages between the mobile device, the first network domain and the second network domain in order to suitably prepare and execute the inter-domain handover, as detailed below.

In the example shown in Fig. 1, during operations, the mobile device 100, to perform the inter-domain handover of the communication path 151 from the first network domain to the communication path 152 towards the second network domain, first transmits a resource request 130 to the first network domain 110. The first network domain, based on the resource request 130, generates a resource request 131 for the second network domain 120and transmits the resource request 131 to the second network domain.

This message requests the second network domain 120 to determine whether sufficient communication resources are available at the second network domain for taking over the communication path, i.e. to handle the ongoing communication between the mobile device and a communication device 160 through the first network domain. After the determination operations at the second network domain, the second network domain transmits a resource response 132 towards the mobile device 100, indicating whether sufficient resources are available. The resource response 132 may be transmitted to the mobile device either directly or through the first network domain 110.

If the resource response 132 indicates that sufficient resources are available at the second network domain, the mobile device initiates a handover in operation 133. After the handover the communication path 152 between the mobile device and the communication device 160 through the second network domain 120 will be established, and the first communication path 151 between the mobile device and the communication device 160 through the first network domain can be terminated.

The above procedure results in a reduced time delay for performing an inter-domain handover, as the mobile device initiates the handover. Further, the time delay can be reduced by performing the required signalling for determining the availability of resources at the second network domain between the mobile device and the second network domain during the ongoing communication via the communication path 151 between the mobile device and the communication device 160 through the first network domain. Only after the mobile device is informed that sufficient resources are available at the second network domain, the actual inter-domain handover is initiated. Further, the mobile device may make use of control equipment of the first network domain, e.g. to forward the resource request and/or the resource response.

Moreover, as the availability of resources at the second network domain is determined while the first communication path 151 is maintained, a disruption of service can be avoided, if it turns out that an inter-domain handover to the second network domain is not possible.

In the following the system shown in Fig. 1 will be outlined in further detail. It is noted that the following constitutes examples only and should not be construed as limiting the invention.

The mobile device 100 in Fig. 1 is shown as a mobile telephone but may instead also be any other kind of mobile communication device such as a mobile computing device and similar, including laptop computers, PDA (Personal Digital Assistant), etc. The mobile device 100 is the source or destination of a one or bi-directional communication to another mobile or fixed wireline communication device of the first network domain and/or second network domain or any other communication device accessible through the first and second network domain and possibly a further communication network, e.g. a POTS (Plain Old Telephone System).

Alternatively or in addition thereto, the mobile device may itself constitute a relay node of a communication network for relaying a communication path between two communication devices.

The mobile device may operate in accordance with any known standard such as GSM, UMTS, D-AMPS and similar.

Further, the mobile device may form part of a heterogeneous network, such as an ad-hoc communications network. A heterogeneous or ad-hoc network may be a wireless network formed without a central administration or without a centralized management of communication resources, such as assignment of communication channels to communicating parties, etc.

Communications carried out by or using the mobile device 100 may involve voice and data communications, for example in a regular telephone call or a data communication or combined approaches. Further, communications may be carried out packetized transmission of data blocks along the communication path, or may be carried out using any other kind of access scheme. The communication path may include a channel for control signalling and a channel for user information such as voice information or data.

The mobile device 100 preferably includes a processor and a memory for implementing the functionality of the request handler 101 and the handover handler 102. For example, the memory may store software instructions of programs which, when loaded into the processor, make the processor execute the functionality of the request handler and the handover handler as detailed above as well as possibly of any other communication or operational functionality of the mobile device. Alternatively or in addition thereto, the functionality of the request handler and the handover handler may at least partially be realized by dedicated hardware.

Further, the mobile device may include a transmitter and a receiver (not illustrated in Fig. 1) for executing the required transmission and reception operations for transmitting and receiving information via the air interface.

Further, the mobile device may include means to determine the necessity of an inter-domain handover. A handover decision may be based on signal strength measurements of signals from the first and/or second network domain. Further, a handover decision may be based on information received from the first network domain and/or the second network domain. For example, the first network domain could suggest a handover, if a communication load at the first network domain is excessive, or if resource requirements for the communication path have changed and can not any longer be satisfied by the first network domain. It is also possible that the mobile device decides to perform an inter-domain handover, if communication requirements change and/or if the first network domain is unable to allocate sufficient or appropriate resource first for the communication. For example, a transmission bandwidth requirement during a communication may change, if a larger amount of data needs to be transmitted, or the communication needs to fulfil real-time requirements.

The first network domain and the second network domain as shown in Fig. 1 may constitute separate networks, such as communication networks managed by different operators. Alternatively, the network domains may belong to separate portion of a single communication network, e.g. portions of a network lacking comprehensive knowledge regarding available resources at the respective network portions or domains, an example being a heterogeneous network or ad-hoc network.

The first and second network domain may operate according to any known communication standard such as GSM, UMTS, D-AMPS, etc. Further, the network domains may at least form part of a heterogeneous communication network, such as an at-hoc communication network. While the first and second network domains may operate in accordance with the same network standard, it is also possible that the first and second network domains operate in accordance with different communication standards. All that is required is that the mobile device in the position to establish communications with both, the first network domain and the second network domain.

The communication device 160 may constitute any kind of communication device, such as a mobile telephone, a mobile computing device and similar and may be engaged in a one or bi-directional voice or data communication with the mobile device 100. While Fig. 1 illustrates a wireless connection between the network domains and the communication device 160, the communication device 160 may also be constituted by a wireline device and be connected via a traditional telephone network to at least one of the network domains.

The communication path 151 between the mobile device 100 through the first network domain 110 to the communication device 160 is assumed to initially carry communications between or through the mobile device and the first network domain. It is assumed that the mobile device is suitably authenticated toward the first network domain. On the other hand, the communication path 152 between the mobile device 100 and the second network domain 120 and the communication device 160 is assumed to be the communication path after performing the handover. Accordingly, while before the inter-domain handover communication will be carried out using the communication path 151 after the inter-domain handover communications will be carried out using the communication path 152. While the first communication path 151 may be terminated prior or during the handover, i.e. before the second communication path 152 is established, it is also possible that both communication paths 151 and 152 coexist during a short period of time during the inter-domain handover. The communication paths 151 and 152 may be constituted by fully wireless or partially wireless links.

The communication paths may further consist of a signalling link for transmitting control signals, such as the requests and messages, i.e. the transmission of the resource request 130, of the research response 132 and the initiation of the handover 133 may be carried out by making use at least one of the first and second communication paths 151 and 152 or may be carried out using a separate signalling path. Further, the communication paths may further consist of a user link for transmitting user information, i.e. voice or data.

Communications between the first network domain and the second network domain including transmission of the resource request 131 from the first network domain to the second network domain and/or of the resource response 132 from the second network domain through the first network domain to the mobile device may be wireless transmissions or may make use of wire line connections, as required.

According to an advantageous embodiment of the system shown in Fig. 1, the mobile device may also be adapted to perform authentication operations required for the handover of the communication path to the second network domain. The authentication of the mobile device toward the second network domain may, like the resource reservation, be carried out by making use of the first network domain partially handling authentication operations or forwarding authentication messages between the mobile device and the second network domain.

The resource reservation and authentication operations required prior to the actual inter-domain handover may be carried out concurrently or in a sequence. For example, the second network domain may transmit a clear handover clearance to the mobile device only after a successful resource reservation and authentication of the mobile device at the second network domain.

As resource reservation operations and authentication operations may at least partially be carried out, at the time of actually transferring the communications from the first communication path 151 to the second communication path 152, a time delay imposed by the inter-domain handover can be reduced. After the inter-domain handover the mobile device may only have to carry out re-authentication operations and reservation operations to actually reserve the resources at the second network domain and complete the authentication procedure.

The sequential or concurrent execution of the resource reservation and authentication allows to suitably preparing the inter-domain handover the time of interruption or impairment of the communication between the mobile device 100 and the communication device 160 during actual inter-domain handover.

Further, as all communication messages between the mobile device and the second network domain can be suitably handled or forwarded by or through the first network domain, the existing communication path between the mobile device and the first network domain can be employed and it may not be necessary to establish direct communications between the mobile device and the second network domain prior to initiating the handover.

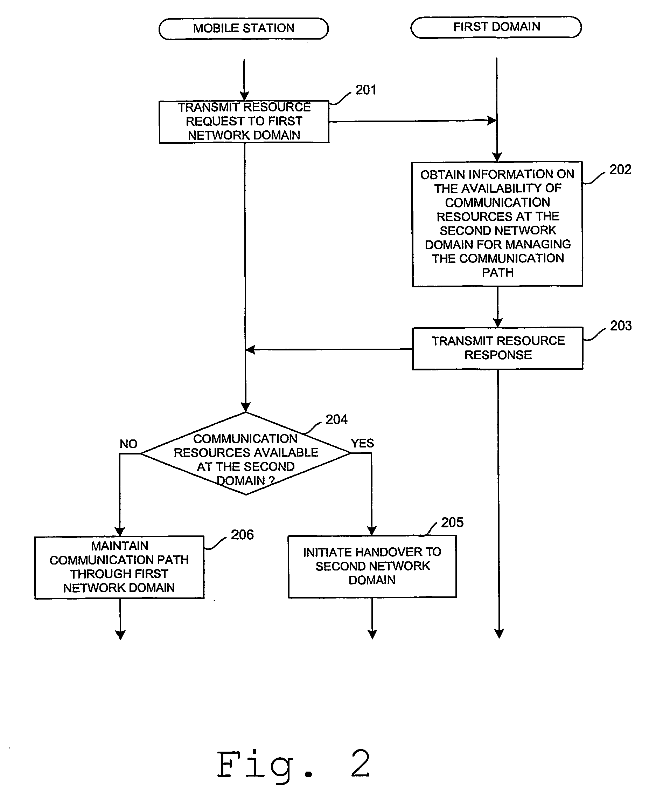

In the following a further embodiment of the invention will be described with respect to Fig. 2.

Fig. 2 illustrates operations for performing an inter-domain handover of a communication path from a first network domain to a second network domain according to a further embodiment of the invention. The operations of Fig. 2 may be carried out by making use of the system shown in Fig. 1, however, the embodiment of Fig. 2 is not limited thereto.

In a first operation 101 a mobile device, such as the mobile device 100 of Fig. 1, transmits a resource request to a first network domain, such as the first network domain 110 of Fig. 1. The mobile device may be adapted to generate and transmit the resource request upon determining the necessity of an inter-domain handover from the first network domain to a second network domain, such as the second network domain 120 shown in Fig. 1. As noted before, the mobile device may make a decision regarding the inter-domain handover based on signals strength measurements of signals received from the first network domain and the second network domain. Alternatively, in addition thereto, the mobile device may also make the handover decision based on information received from the first and/or second network domain, e.g. indicating or suggesting an inter-domain handover, e.g. based on load considerations, service considerations and similar.

Generally, the resource request will suitably contain all information required at the first network domain and may include for example the identity of the second network domain, the required resources, an identifier of the mobile device and similar. Alternatively, the resource request may also instruct the first network domain to determine a suitable second network domain for the inter-domain handover, if this information is not available at the mobile device. In addition thereto, the resource request may also include a quality of service indicator, defining required characteristics of a communication path to be established between the mobile device and the second network domain. For example, the communication path to be established after the handover may have the same characteristic requirements as the communication path to the first network domain prior to the domain handover, however, it is also possible that the communication path to be established between the mobile device and the second network domain is required to have characteristics different from the communication path between the mobile device and the first network domain.

Moreover, the resource request may include information on the identity of a resource manager at the second network domain or may include an instruction to determine the identity of a resource manager at the second network domain.

The resource request is transmitted from the mobile device to the first network domain, e.g. by making use of the already established communication path between the mobile device and the first network domain, such as the communication path 151 in Fig. 1, or may make use of different or additional communication means.

After reception at the first network domain, in an operation 202 the first network domain performs operations to obtain information on the availability of the requested communication resources at a second network domain, such as the second network domain 120 of Fig. 1, for managing the communication path. Operation 202 may include transmitting a resource request from the first network domain to the second network domain, interrogating the second network domain to determine at the availability of the required sources and possibly allocate or reserve the requested resources.

Further, operation 202 may include receiving a resource response from the second network domain at the first network domain, indicating whether sufficient resources are available at the second network domain and/or whether the resources have been successfully reserved.

Thereafter, in an operation 203 the first network domain returns a resource response to the mobile device. The resource response preferably includes an indication whether sufficient resources are available at the second network device and/or have already been reserved at the second network domain.

Thereafter, if it is determined in operation 204 that sufficient communication resources are available at the second network domain, i.e. if the decision in operation 204 is "YES", in an operation 205 the mobile device initiates the inter-domain handover to the second domain. Operation 205 may include transmitting a reservation message to the second network domain, to actually reserve the resources for the communication path between the mobile device and the second network domain and may include transmission of a handover confirmation to at least one of the first network domain and second network domain. The communication path between the mobile device and the first network domain can then be terminated.

If in operation 204 it is determined that communication resources are not available at the second network domain, i.e. if the decision in operation 204 is "NO", the communication path between the first network domain and the mobile device is maintained. Alternatively, operation 206 may also include determine a third network domain as a potential handover candidate and the operations described above may be re-detailed, until a network domain with sufficient communication resources is determined in this trial end error approach.

The embodiment of Fig. 2 illustrated operations for reserving resources at the second network domain, while omitting a description of operations carried out to also authenticate the mobile device toward the second network domain.

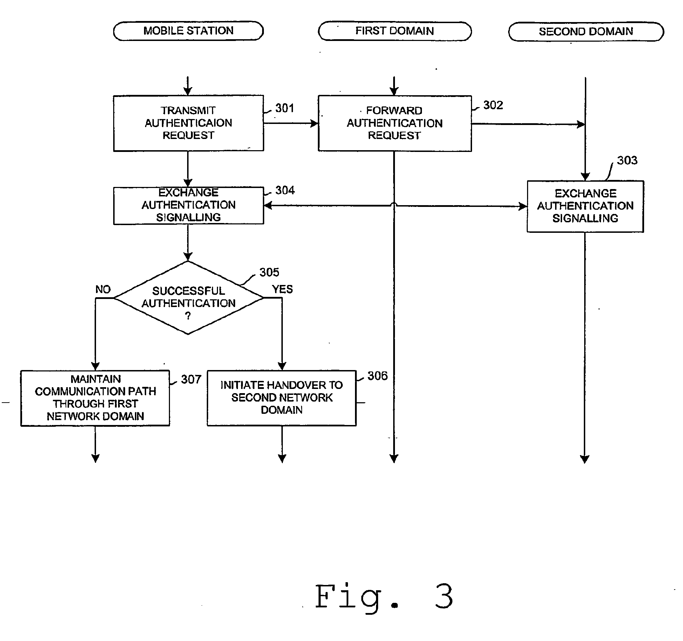

In the following a further embodiment of the invention will be described with regard to Fig. 3.

Fig. 3 illustrates operations or performing an inter-domain handover carried out at a mobile device if a network domain and a second network domain, particularly illustrating operations for authenticating the mobile device towards the second network domain. The operations of Fig. 3 may be carried out using the system shown in Fig. 1, however, the embodiment of Fig. 3 is not limited thereto.

It is noted that the authentication operations of Fig. 3 may be carried out concurrently with the reservation operations of the embodiment described with regard to Fig. 2, or in a sequential fashion, with the reservation operations at least partially preceding or succeeding at the authentication operations of the embodiment of Fig. 3.

In a first operation 301 the mobile device generates and transmits an authentication request to the first network domain. The authentication request preferably includes information necessary to identify the mobile device and any further information required to prepare the authentication procedure.

In an operation 302 the first network domain receives the authentication request and forwards the same to the second network domain. While the first network domain may simply forward the authentication request to the second network domain it is also possible that the first network domain processes the authentication request, e.g. includes in authentication information available at the first network domain, e.g. resulting from an authentication of the mobile device towards the first network domain. While the first network domain may forward the authentication request in operation 302, in an alternative it is also possible that the mobile device directly transmits the authentication request to the second network domain.

After receiving the authentication request at the second network domain, in an operation 303 and 304, the mobile device and the second network domain exchange authentication signalling to complete the authentication procedure. While the authentication signalling may be directly exchanged between the mobile device and the second network domain, it is also possible that the first network domain relays the authentication signalling, in order to advantageously use the communication path established between the first network domain and the mobile device.

The authentication signalling between the mobile device and the second network domain is performed to establish a security association between the mobile device and the second network domain. This may include exchanging or generating session keys, tokens, etc. between or at the participating parties, i.e. the mobile device and the second network domain. Depending on the implementation of the authentication procedure, it is possible to authenticate the mobile device towards the second network domain and/or the second network domain towards the mobile device. The implementation of the authentication may be done in various ways, and may employ state-of-the-art authentication methods such as user authentication for network access. A user authentication may be used to validate the true identity of a user to a network. This ensures that the signalling and a data or voice connection is not compromised by forged identities, or also diverted destinations.

Here, the user and the network typically have a shared secret, such as a password and user name or shared key on a SIM card, and similar. The authentication process can be carried out on a data link layer, as known in the art such as PPP with PAP or CHAP, may be carried out on the network layer, such as PANA protocols, further RADIUS, DIAMETER or similar. Still further, the authentication process may be carried out on the application layer, e.g. involving HTTP redirected with web-based log-in. The successful authentication between the mobile device and the second network domain is used to provide the basis for the transmission, such as PPP handshake, or to grant a broader network access, such as a new IP address or a filtering according to rules.

Still further, authentication may use techniques like message integrity protection or authentication with a digital signature, wherein, based on a user authentication, an individual signalling and exchange of data messages may be protected by additional integrity codes, such as signatures, message authentication codes and similar. Further, individual signalling and messages may be encrypted using symmetric or asymmetric cryptography. For example symmetric cryptography is used, the mobile device and the second network domain may already process a shared secret key, which need not be exchanged over the air interface.

The above illustrates various authentication methods and options and a suitable one or any further authentication scheme may be chosen in accordance with implementation requirements.

If an IP based approach for the handover it is chosen, the mobile device obtains a new local IP-address after the inter-domain handover. Consequently, the authentication method is continued by using a new IP address or layer address after the handover.

The above described options for an authentication between the mobile device and the second network domain prior to the actual inter-domain handover lead to a much reduced or absent subsequent re-authentication procedure after the handover, as a full authentication during the handover or after the handover is not required.

After the exchange of the authentication signalling an operation 303 and 304, in an operation 305 it is determined whether the mobile device was successfully identified toward the second network domain and/or vice versa.

If an operation 305 a decision is "YES", i.e. if a successful authentication is present, in an operation 306 the mobile device initiates the inter-domain handover to the second network domain.

If an operation 305 the decision is "NO", indicating that the identification was not successful, the communication path through the first network domain can be maintained in an operation 307. Alternatively or in addition thereto, in operation 307, a third network domain may be determined and the above described authentication operations may be repeated with the third network domain until in an trial error approach the mobile device can successfully be authentication towards a new network domain.

As noted above, the operations for resource reservation described with regard to Fig. 2 and the authentication operations described with regard to the present embodiment of Fig. 3 may be carried out concurrently or sequentially. Further, it may be preferred to only transmit a resource response to the mobile device, if the mobile device can be successfully authenticated toward the second network domain, in order to reduce a communication overhead required for the preparation of the inter-domain handover.

Alternatively, or in addition thereto, the authentication signalling between the mobile device and the second network domain may only be exchanged in case the second network domain determines that sufficient or appropriate communication resources are available. Thus, a communication overhead can be further reduced in case an inter-domain handover is not possible.

Moreover, together with the authentication operations between the mobile device and the second network domain, the second network domain may also determine whether the mobile device is actually authorized to make use of the communication resources. This may include determining whether the user of the mobile device has subscribed to the appropriate services, whether sufficient funds to compensate for the use of the communication resources are available, or similar.

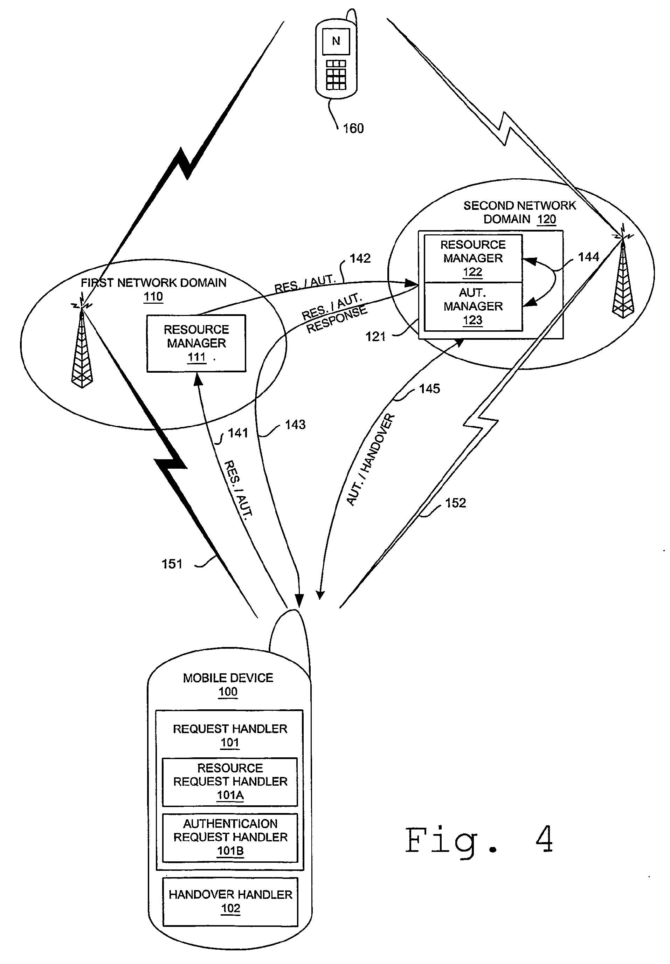

In the following, a further embodiment of the invention will be described with regard to Fig. 4.

Fig. 4 illustrates elements of a system for performing an inter-domain handover according to another embodiment of the invention. The embodiment shown in Fig. 4 is similar to the one shown in Fig. 1, however, further shows details of the mobile device, the first network domain and the second network domain.

In Fig. 4 the mobile device 100 includes the handover handler 102, as described before with regard to Fig. 1. Further, the mobile device includes the request handler 101. However, further to the embodiment of Fig. 1, the request handler includes a resource request handler 101a and an authentication request handler 101b. The resource request handler 101a is provided for performing all operations required for resource reservation signalling between the mobile device and the second network domain. Further, the authentication request handler 101b is provided for performing all signalling required for authenticating the mobile device towards the second network domain.

Further, in addition to the embodiment shown in Fig. 1, the first network domain includes a resource manager 111. The resource manager 111 is responsible for managing the communication resources of the first network domain and may be a centralised control entity maintaining information on the availability and/or usage of resources of the first network domain. Alternately, the resource manager 111 may form part of a heterogeneous communication network, constituting an entity capable of connection two elements of the second network domain.

Still further, in addition to the embodiment shown in Fig. 1, the second network domain includes a communication manager 121 for managing communication operations of the second network domain. The communication manager 121 may be a central control entity of the second network domain or alternately constitute an element of a heterogeneous network, capable of allocating at least part of the communication resources of the second network domain. The communication manager 121 includes a second domain resource manager 122 of the second network domain and a second domain authentication manager 123 of the second network domain. The second domain resource manager 122 is responsible for allocating and/or reserving resources of the second network domain for use by a communication path. The second domain authentication manager 123 is responsible for performing authentication operations and signalling exchange for authenticating the mobile device.

The second domain resource manager 122 and the second domain authentication manager 123 can be logically and/or physically separate entities of the second network domain and of the communication manager 121, such as constituted by different servers located at different locations or may be realized by separate software processes executed on a single server.

The first domain resource manager 111, the second domain resource manager 122, the second domain authentication manager 123, the resource request handler 101 of the mobile device and the authentication request handler 101b of the mobile device as well as the handover handler 102 of the mobile device are responsible for exchanging the required information and/or messages for performing the inter-domain handover including appropriate resource reservation and authentication, as outlined in the following.

In a first message or group of messages 141 the resource request handler and/or authentication request handler transmits a resource message and/or authentication message to the first domain resource manager 111 of the first network domain 110. It is noted that the resource request and authentication request may be transmitted concurrently in a single message or sequentially in separate messages.

The first message or group of messages 141 may include an identity of the second domain resource manager 122 of the second network domain 120, determined beforehand by the mobile device 100, or may include an instruction for the first domain resource manager 111 to perform operations to determine the second domain resource manager 122. The second domain resource manager 122 may be discovered by making use of registries available to the mobile device and/or first network domain, or may be determined by monitoring ongoing communications, such as communications including an identity of the second domain resource manager 122, or by monitoring a beacon signal periodically transmitted by the second domain resource manager.

The first domain resource manager 111, after discovering or receiving the identity of the second domain resource manager, in an operation 142, transmits a resource request and/or authentication request to the second domain resource manager 122. The resource request and authentication request may be transmitted concurrently or sequentially.

The second domain resource manager 122, after receiving the resource request and/or authentication request transmitted from the first domain resource manager 111, determines whether sufficient resources for handling the communication path after the handover, i.e. communication path 152, are available at the second network domain.

Further, the second domain resource manager 122 talks to the second domain authentication manager 123, as indicated by an arrow 144, in order to support the authentication operations required for authenticating the mobile device toward the second network domain. Any authentication signalling between the second domain authentication manager and the mobile device may be carried out through the second domain resource manager 122 and/or the first domain resource manager 111.

If the second domain resource manager can successfully determine available resources at the second network domain and/or if the second domain authentication manager can successfully authenticate the mobile device, in a resource/authentication response 143 the mobile device is notified that the requested inter-domain handover can be performed.

Thereafter, in an operation 145 the inter-domain handover is initiated and additional required reservation and/or re-authentication operations between the communication manager 121 of the second network domain, e.g. the second domain resource manager and the second domain authentication manager are performed. Thereafter, the communication path 152 between the second network domain and the mobile device can be established, and the communication path 151 between the first network domain and the mobile device can be terminated.

As noted above, the resource request may specify at least one of the required resources, a quality of service indication, an identifier of the second network domain or an identifier of the mobile device.

According to a further alternative, the request handler may be adapted to discover the first domain resource manager of the first network domain, and to forward the resource request to the first domain resource manager, instructing the first domain resource manager to process the resource request and forward the resource request to a second domain resource manager of the second network domain, to instruct the second domain resource manager to check the availability of the required resources and, if available, to reserve the required resources and return a resource response to the first network domain.

Moreover, the request handler may be adapted to perform operations to discover the second domain resource manager and/or the second domain authentication manager or adapted to instruct the first domain resource manager to perform operations to discover the second domain resource manager and/or the second domain authentication manager.

Still further, the request handler may be adapted to transmit the authentication request to the first domain resource manager, instructing the first domain resource manager to identify a second domain resource manager and to forward the authentication request to the second domain resource manager, the second domain resource manager forwarding the authentication request to a second domain authentication manager of the second network domain.

The authentication request may include all information necessary for authenticating the mobile device toward the second network domain and the request handler may be adapted to receive an authentication response from the second network domain in association with the resource response. The term "in association" refers to any physical or logical association, i.e. in the present case between the authentication response and the resource response.

The embodiment of Fig. 4 illustrates, how the invention can make use of existing resources of the first network domain and the second network domain to prepare an inter-domain handover, and to carry out the inter-domain handover at a reduced time delay.

The discovery operations for determining the identity of the second domain resource manager 122 may include discovery mechanisms built in a resource reservation protocol available at the second network domain. Similarly, the mobile device may discover the first domain resource manager, if not already known, by making use of discovery mechanisms built in a resource reservation protocol of the first network domain.

Thus, instead of terminating a communication path between the mobile device and a first network domain and thereafter establishing a communication path between the mobile device and a second network domain, the present embodiment discloses to perform preparatory exchange of signalling and messages between the mobile device and the second network domain during still maintaining the communication path between the mobile device and the first network domain. Thus, only a minimum exchange of information and signalling between the mobile device and the second network domain after or during the actual handover procedure of the communication path is necessary, reducing a required amount of time and disruption of services.

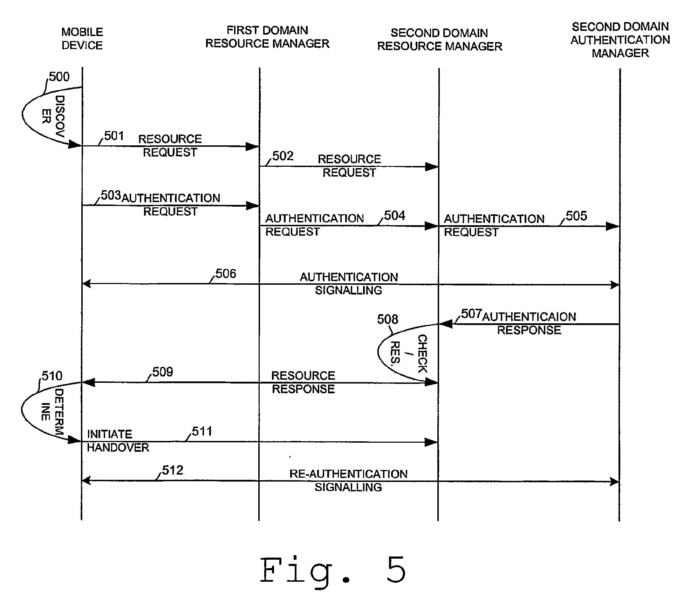

In the following, a further embodiment of the invention will be described with regard to Fig. 5.

Fig. 5 illustrates a time sequence of messages for an inter-domain handover according to another embodiment of the invention, particularly illustrating operations for resource reservation and authentication. The messages shown in Fig. 5 may be transmitted using the system of Fig. 4, however, the embodiment of Fig. 5 is not limited thereto.

Fig. 5 illustrates operations for performing an inter-domain handover carried out at a mobile device, such as the mobile device 100 of Fig. 4, a first domain resource manager, such as the first domain resource manager 111, a second domain resource manager, such as the second domain resource manager 122 of Fig. 4, and a second domain authentication manager, such as the second domain authentication manager 123 of Fig. 4.

In a first operation 500 the mobile device performs operations to discover the first domain resource manager, e.g. using a reservation signalling protocol supported by the first network domain.

Thereafter, as indicated at 501, the mobile device generates and transmits a resource request to the first domain resource manager. As noted before, the resource request may include an identity of the mobile device, the required resources and/or a quality of service indicator. Additionally, the resource request may include an identifier of the second domain resource manager, if discovered by the mobile device, e.g. making use of a resource reservation signalling a protocol supported by the second network domain. Alternatively, the first domain resource manager, after receiving the resource request, may process the resource request and perform operations to discover the second domain resource manager.

Then, as indicated at 502, the first domain resource manager transmits a resource request to the second domain resource manager, which, in response thereto, determines the availability of the requested resources. Additionally, the second domain resource manager may reserve the required resources.

Further, as indicated at 503, the mobile device transmits an authentication request to the first domain resource manager, requesting authentication of the mobile device towards the second domain.

As indicated at 504, the first domain resource manager then transmits the authentication request to the second domain resource manager, which in turn requests the second domain authentication manager, as indicated at 505. Alternatively, the first domain resource manager may directly transmit the authentication request to the second domain authentication manager, e.g., after appropriately discovering the identity of the second domain authentication manager.

Thereafter, as indicated at 506, the mobile device and the second domain authentication manager exchange authentication signalling, as noted before.

As indicated at 507, the second domain authentication manager then transmits an authentication response to the second domain resource manager, the authentication response indicating whether the mobile device was successfully authenticated.

In an operation 508 the second domain resource manager, if the mobile device was successfully authenticated, may reserve the requested resources and, as indicated at 509, return a resource response to the mobile device, either directly or through the first domain resource manager.

The mobile device, as indicated at operation 510, determines whether the authentication was successful and the resources have been allocated, and, if this is the case, initiates the handover, as indicated at 511.

The resource response 509 may simply indicate successful authentication and resource reservation, or may include information on resources offered by the second network domain for the requested handover, in which case the determination operation 510 may include a decision process, for deciding whether the offered communication resources are acceptable.

Finally, in an operation 512 a re-authentication signalling and/or reservation signalling between the mobile device and the second network domain is executed, in order to complete the inter-domain handover. The re-authentication signalling and/or reservation signalling at 512 only incur a small time delay, which is acceptable for virtually any communications having quality of services requirements.

It is noted that the flow of messages may terminate at 502, if the second domain resource manager does not have the required resources, in which case transmission capacity otherwise required by the subsequent messaging exchange can be saved.

It is further noted that the flow of messages need not follow the exact time sequence shown in Fig. 5, for example, instead of first transmitting the resource request, the mobile device may first transmit the authentication request.

According to a further alternative, the mobile device may transmit a handover confirmation to the second domain resource manager and may then re-authenticate with the second domain authentication manager. Further, the second domain resource manager and second domain authentication manager may synchronise operations before transmitting the resource response towards the mobile device.

In the following, a further embodiment of the invention will be described with regard to Fig. 6a - 6e.

These figures show alternatives for exchanging resource reservation and authentication information according to further alternative embodiments of the invention. The embodiments of Fig. 6a - 6e may be carried out using the system shown in Fig. 4, however, the embodiments of Fig. 6a - 6e are not limited thereto.

The Figs. 6a - 6e illustrate an exchange of messages between a mobile device, a first domain resource manager, a second domain resource manager and a second domain authentication manager.

Fig. 6a illustrates an embodiment of the invention where an identity of the second domain authentication manager is discovered by the first domain resource manager and transmitted to the mobile device, so that the mobile device can directly transmit the authentication request to the second domain authentication manager.

In a first operation 601 the mobile device transmits an authentication request to the first domain resource manager, requesting the identity of the second domain authentication manager. In response thereto, the first domain resource manager discovers the identity of the second domain authentication manager, e.g. by making use of a communication protocol supported by the second network domain. The first domain resource manager may discover the second domain authentication manager identity by discovering the second domain resource manager and inquiring at the second domain resource manager to disclose the identity of the second domain authentication manager.

In an operation 601 the first domain resource manager, after obtaining the identity of the second domain authentication manager, returns an ID response to the mobile device including the identity of the second domain authentication manager.

Thereafter, in an operation 602 the mobile device transmits the authentication request directly to the second domain authentication manager and subsequent authentication signalling prior to the actual handover can be carried out between the mobile device and the second domain authentication manager, either directly or through the first domain resource manager and/or second domain resource manager.

Fig. 6b illustrates an embodiment including transmitting an authentication request from the mobile device to the first domain resource manager, instructing the first domain resource manager to identify a second domain resource manager and to forward the authentication request to the second domain resource manager, instructing the second domain resource manager to forward the authentication request to the second domain authentication manager.

In this connection, in an operation 603, the mobile device transmits an authentication request to the first domain resource manager. The first domain resource manager then discovers the second domain resource manager. If the mobile device already discovered the second domain resource manager, this discovery step at the first domain resource manager can be omitted. In an operation 604 the first domain resource manager then transmits an authentication request to the second domain resource manager, instructing the second domain resource manager to forward the authentication request to the second domain authentication manager as indicated at 605.

The embodiment described in Fig. 6b makes use of the fact that the second domain resource manager generally knows the identity and is able to access the second domain authentication manager, as they both form part of the control equipment of the second network domain.

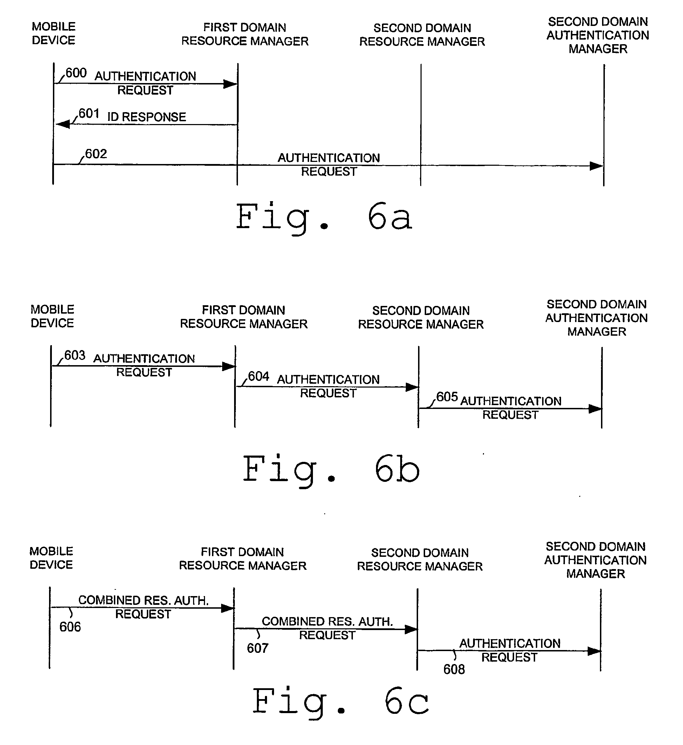

Fig. 6c illustrates in operations of an embodiment for performing an inter-domain handover, particularly making use of a combined signalling for resource reservation and authentication.

In a first operation 606 the mobile device transmits a combined resource reservation and authentication request to the first domain resource manager, thus avoiding the transmission of separate messages for resource reservation and authentication and thus reducing a network bandwidth requirement.

Thereafter, the first resource manager, after appropriate discovery operations, transmits the combined resource reservation and authentication request to the second domain resource manager in an operation 607, and in operation 608 the second domain resource manager forwards the authentication request to the second domain authentication manager.

Fig 6d illustrates an embodiment for performing an inter-domain handover, allowing to further reduce a bandwidth requirement for resource reservation and authentication of the mobile device.

In a first operation 609 the mobile device transmits a reservation request to the first domain resource manager, as detailed before. The first domain resource manager forwards the reservation request in an operation 610 to the second domain resource manager, as also outlined before. Further, the first domain resource manager, being aware of the identity of the mobile device, since the communication path is presently established between the mobile device and the first network domain and the mobile device is appropriately authenticated at the first network domain, generates an authentication request on behalf of the first mobile device and transmits the authentication request in an operation 611 to the second domain resource manager. The second domain resource manager then forwards the authentication request in an operation 612 to the second domain authentication manager.

This embodiment allows to completely omit transmission of an authentication request from the mobile device to the first domain resource manager, as the first domain resource manager, based on the resource request from the mobile device, generates the authentication request and therefore saves network capacity.

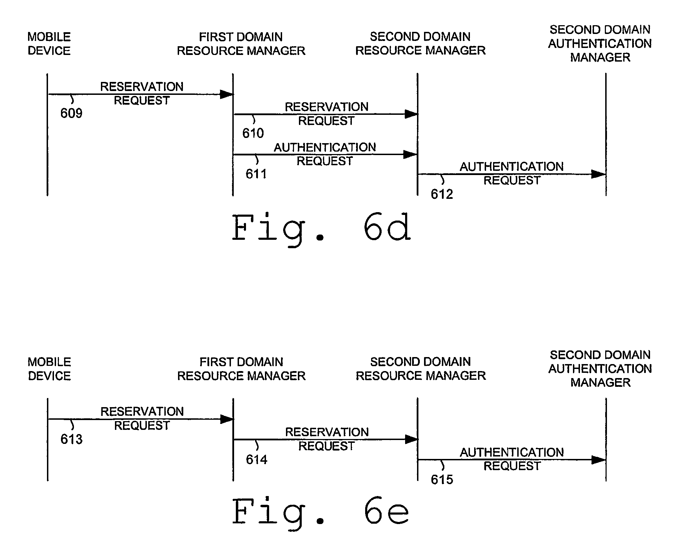

Fig. 6e illustrates an embodiment for performing an inter-domain handover allowing to further reduce a bandwidth requirement for resource reservation and authentication.

In an operation 613 the mobile device transmits a reservation request to the first domain resource manager and the first domain resource manager transmits in an operation 614 a reservation request to the second domain resource manager. Based on the reservation request the second domain resource manager appropriately determines availability of the communication resources, as detailed before, and, based on the reservation request, the second domain resource manager generates an authentication request and transmits same to the second domain authentication manager in an operation 615, in order to trigger authentication signalling between the mobile device and the second domain authentication manager.

The embodiments of Figs. 6a - 6e illustrate portions of the operations required for inter-domain handover, the remaining operations for completing the inter-domain handover may be as described in previous embodiments.

In the following a further embodiment of the invention will be described with regard to Figs. 7a - c. While the operations illustrated in Figs. 6a - 6c show preparatory steps taken before initiating the inter-domain handover, Figs. 7a - 7c illustrate operations after initiating the inter-domain handover.

The embodiments of Figs. 7a - 7c illustrate operations carried out between a mobile device, a second domain resource manager and a second domain authentication manager, such as the mobile device 100, the second domain resource manager 121 and the second domain authentication manager 122 illustrated in Fig. 4. However, it is noted that the embodiments of Figs. 7a - 7c are not limited thereto.

Fig. 7a illustrates an embodiment for post-handover resource reservation and re-authentication.

In a first operation 701 the mobile device transmits a resource reservation message to the second domain resource manager in an operation 701. The resource reservation instructs the second domain resource manager to reserve the resources negotiated in the message exchange prior to initiating the inter-domain handover.

Further, in an operation 702 the mobile device transmits a re-authentication request to the second domain authentication manager, in order to complete the authentication prepared prior to initiating the handover. The re-authentication may include exchanging of tokens, security codes or authentication identifiers negotiated or generated beforehand, e.g. during the authentication signalling carried out before the handover, as detailed before with regard to the previous embodiments. The resource reservation of operations 701 and the re-authentication of operation 702 require a short amount of time, as a resource reservation and authentication was prepared prior to initiating the handover.

Thereafter, in an operation 703 the second domain resource manager and the second domain authentication manager synchronize operations and the communication path can be made available for use by the mobile device, as known in the art.

In an alternative the mobile device transmits a handover confirmation to the second domain resource manager, in order to confirm the desire to perform the inter-domain handover and then re-authenticate with the second domain authentication manager.

According to still another alternative, the mobile device may transmit an acknowledgement message to the first network domain, the acknowledgement message indicating a successful handover to the second network domain.

Fig. 7b illustrates an embodiment of post-handover operations carried out by the mobile device, the second domain resource manager and the second domain authentication manager.

According to this embodiment, in an operation 704 the mobile device transmits a resource reservation message to the second domain resource manager, for reserving the resources negotiated beforehand. Further, in an operation 705 the mobile device transmit or exchanges re-authentication signalling to or with the second domain resource manager. Further, in an operation 706, the second domain resource manager transmits or exchanges further re-authentication signalling to or with the second domain authentication manager, in order to complete the re-authentication of the mobile device. Thereafter, in an operation 707 the second domain resource manager and second domain authentication manager synchronize operations, in order to establish the handed over communication path and to continue the ongoing data or voice communication.

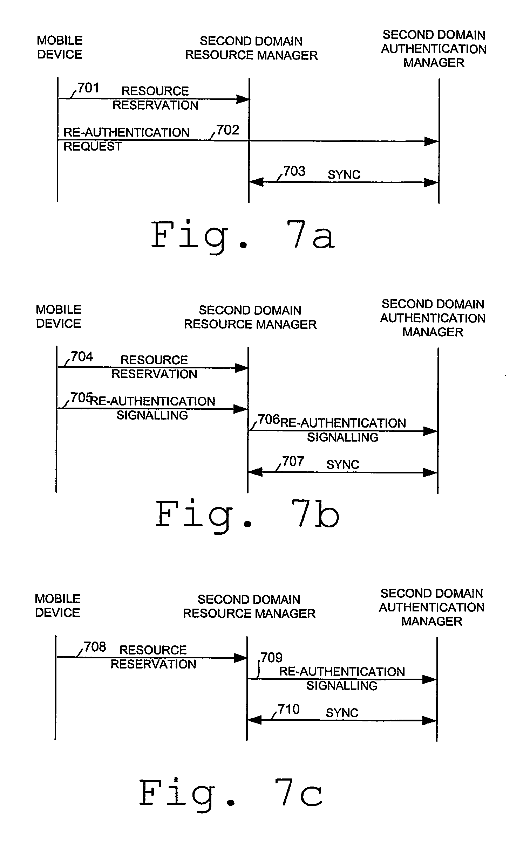

The embodiment of Fig. 7c illustrates an example of post-handover operations allowing to further reduce a bandwidth requirement.

In an operation 708 the mobile device transmits a resource reservation message to the second domain resource manager, instructing the second domain resource manager to reserve the beforehand negotiated communication resources at the second network domain and instructing the second domain resource manager to carry out a re-authentication signalling on behalf of the mobile device.

In response thereto the second domain resource manager carries out a re-authentication signalling to or with the second domain authentication manager in an operation 709. This may include transmitting an authentication identifier of the mobile device received or negotiated during the earlier authentication signalling before the handover, as outlined before with regard to the previous embodiments, or similar. Thereafter, in an operation 710 the second domain authentication manager and second domain resource manager synchronize operations, as detailed before.

It is noted that a program or programs may be provided having instructions adapted to cause a data processing device or a network of data processing devices to realize elements of the above embodiments and to carry out the method of at least one of the above operations of any of the previous embodiments.

Also, a computer-readable medium may be provided having a program embodied thereon, where the program is to make a computer or a system of data processing devices to execute functions or operations of the features and elements of the above-described examples. A computer-readable medium can be a magnetic or optical or other tangible medium on which a program is recorded, but can also be a signal, e.g. analog or digital, electronic, magnetic or optical, in which the program is embodied for transmission. Further, a data structure or a data stream may be provided including instructions to cause data processing means to carry out the above operations. The computer-readable medium may be constituted by the data stream or the data structure. Still further, a computer program product may be provided comprising the computer-readable medium.

As detailed with regard to previous embodiments, a mobile device for performing an inter-domain handover of a communication path from a first network domain to a second network domain may include: a request handler for transmitting a resource request from the mobile device to the first network domain for instructing the first network domain to obtain information on the availability of communication resources at the second network domain for handling the communication path, and for receiving a resource response indicating whether communication resources are available at the second network domain; and a handover handler for initiating the handover to the second network domain, if the resource response indicates that sufficient communication resources are available at the second network domain.

According to another example the resource request specifies at least one of the required resources, a quality of service indication, an identifier of the second network domain and an identifier of the mobile device.

According to another example the request handler is adapted to discover a first domain resource manager of the first network domain, and to forward the resource request to the first domain resource manager, instructing the first domain resource manager to process the resource request and forward the resource request to a second domain resource manager of the second network domain, to instruct the second domain resource manager to check the availability of the required resources and, if available, to reserve the required resources and return a resource response to the first network domain; and the request handler is adapted to receive the resource response from first network domain.

According to another example the request handler is adapted to perform operations to discover the second domain resource manager or adapted to instruct the first domain resource manager to perform operations to discover the second domain resource manager.

According to another example the request handler is adapted to transmit an authentication request to the second network domain and to exchange an authentication signalling with the second network domain; and wherein the handover handler is adapted to initiate the handover to the second network domain, if the mobile device is successfully authenticated.

According to another example the request handler is adapted to transmit at least one of the authentication request and the authentication signalling to the second network domain through the first network domain.

According to another example the request handler is adapted to transmit the authentication request to the first domain resource manager, instructing the first domain resource manager to transmit the authentication request to a second domain authentication manager.

According to another example the request handler is adapted to perform operations to discover the second domain authentication manager or adapted to instruct the first domain resource manager to perform operations to discover the second domain authentication manager.

According to another example the request handler is adapted to receive the identity of the second domain authentication manager and to transmit the authentication request to the second domain authentication manager.

According to another example the request handler is adapted to transmit the authentication request to the first domain resource manager, instructing the first domain resource manager to identify a second domain resource manager and to forward the authentication request to the second domain resource manager, the second domain resource manager forwarding the authentication request to a second domain authentication manager of the second network domain.

According to another example the request handler is adapted to transmit the resource request to the first network domain, instructing the first network domain to generate an authentication message based on the resource request and to forward same to the second network domain.

According to another example the request handler is adapted to instruct the second domain resource manager to generate an authentication message based on the resource request and to forward same to the second domain authentication manager.

According to another example the request handler is adapted to perform the operations for the resource reservation and the authentication of the mobile device toward the second network domain subsequently or concurrently.

According to another example the authentication request includes all information necessary for authenticating the mobile device toward the second network domain and wherein the request handler is adapted to receive an authentication response from the second network domain in association with the resource response.

According to another example the handover handler is adapted to transmit a handover confirmation to the second domain resource manager and to re-authenticate with a second domain authentication manager.

According to another example the handover handler is adapted to transmit an acknowledgement message to the first network domain, the acknowledgement message indicating a successful handover to the second network domain.

According to another example the handover handler is adapted to exchange re-authentication signalling with the second network domain after initiating the handover.

According to another example the re-authentication signalling includes transmitting a re-authentication message from the mobile device to the second domain authentication manager, directly or through the second domain resource manager.

According to another example the re-authentication signalling is generated by the second domain resource manager or is transmitted in association with resource reservation signalling between the mobile device and the second domain resource manager.

## Claims

1. A method of performing an inter-domain handover of a communication path from a first network domain (110) to a second network domain (120) including:
transmitting a resource request from a mobile device (160) to the first network domain, the resource request specifying communication resources required at the second network domain (120) for handling the communication path, to instruct the first network domain (110) to obtain information on the availability of the required communication resources;
receiving a resource response at the mobile device (160) from the first network domain (110) indicating whether the required communication resources are available at the second network domain; and
initiating the handover from the first network domain (110) to the second network domain (120) by the mobile device, if the resource response indicates that sufficient communication resources are available at the second network domain.

2. The method of claim 1, wherein the resource request specifies at least one of the required resources, a quality of service indication, an identifier of the second network domain (120) and an identifier of the mobile device.

3. The method of at least one of the preceding claims, wherein
the mobile device (160) discovers a first domain resource manager of the first network domain, and forwards the resource request to the first domain resource manager;
the first domain resource manager (111) processes the resource request and forwards the resource request to a second domain resource manager of the second network domain;
the second domain resource manager (122) checks availability of the required resources and, if available, reserves the required resources and returns a resource response to the first network domain; and
the first network domain (110) transmits the resource response to the mobile device.

4. The method of claim 3, wherein the first domain resource manager (111) or the mobile device (160) performs operations to discover the second domain resource manager.

5. The method of at least one of the preceding claims, including
transmitting an authentication request from the mobile device (160) to the second network domain (120) and exchanging an authentication signalling between the mobile device (160) and the second network domain; and
initiating the handover to the second network domain, if the mobile device (160) is successfully authenticated.

6. The method of claim 5, wherein at least one of the authentication request and the authentication signalling is transmitted through the first network domain.

7. The method of at least one of claim 5 and 6, wherein the resource response is only transmitted to the mobile device (160), if the mobile device is successfully authenticated.

8. The method of at least one of the preceding claims, including determining whether the mobile device (160) is authorized to use the requested communication resources at the second network domain.

9. The method of at least one of the claims 5 to 8, including transmitting the authentication request from the mobile device (160) to the first domain resource manager, instructing the first domain resource manager (111) transmit the authentication request to a second domain authentication manager of the second network domain.

10. The method of at least one of the claims 8 and 9, wherein the first domain resource manager (111) or the mobile device (160) performs operations to discover the second domain authentication manager.

11. The method of at least one of the claims 8 to 10, including receiving the identity of the second domain authentication manager (123) at the mobile device (160) and transmitting the authentication request from the mobile device (160) to the second domain authentication manager (123).

12. The method of at least one of the claims 5 to 11, including transmitting the authentication request from the mobile device (160) to a first domain resource manager, instructing the first domain resource manager (111) to identify a second domain resource manager (122) and to forward the authentication request to the second domain resource manager, the second domain resource manager (122) forwarding the authentication request to a second domain authentication manager (123).

13. The method of at least one of the preceding claims, wherein the mobile device (160) transmits the resource request to the first network domain (110) and the first network domain, based on the resource request, generates an authentication message and forwards same to the second network domain.

14. The method of at least one of the claims 3 to 13, wherein the second domain resource manager, based on the resource request, generates an authentication message and forwards same to the a second domain authentication manager (123).

15. The method of at least one of the claims 5 to 14, wherein the operations for the resource reservation and the authentication of the mobile device (160) toward the second network domain (120) are performed subsequently or concurrently.

16. The method of at least one of the claims 5 to 15, wherein the authentication request includes all information necessary for authenticating the mobile device (160) toward the second network domain (120) and wherein an authentication response is transmitted from the second network domain (120) to the mobile device (160) in association with the resource response.

17. The method of at least one of the preceding claims, wherein the mobile device (160) transmits a handover confirmation to the second domain resource manager (122) and re-authenticates with a second domain authentication manager (123).

18. The method of at least one of the preceding claims, wherein the mobile device (160) transmits an acknowledgement message to the first network domain, the acknowledgement message indicating a successful handover to the second network domain.

19. The method of at least one of the preceding claims, wherein the mobile device (160) exchanges re-authentication signalling with the second network domain (120) after initiating the handover.

20. The method of at least one of the preceding claims, wherein the re-authentication signalling includes transmitting a re-authentication message from the mobile device (160) to the second domain authentication manager (123), directly or through the second domain resource manager.

21. The method of at least one of the preceding claims, wherein the re-authentication signalling is generated by the second domain resource manager (122) or is transmitted in association with resource reservation signalling between the mobile device (160) and the second domain resource manager.

22. A mobile device (160) for performing an inter-domain handover of a communication path from a first network domain (110) to a second network domain, including:
a request handler (101) for transmitting a resource request from the mobile device (160) to the first network domain, the resource request specifying communication resources required at the second network domain (120) for handling the communication path, to instruct the first network domain (110) to obtain information on the availability of the required communication resources, and for receiving a resource response from the first network domain (110) indicating whether the required communication resources are available at the second network domain; and
a handover handler for initiating the handover from the first network domain (110) to the second network domain, if the resource response indicates that sufficient communication resources are available at the second network domain.

23. The mobile device (160) of claim 22, wherein
the request handler (101) is adapted to discover a first domain resource manager (111) of the first network domain, and to forward the resource request to the first domain resource manager, instructing the first domain resource manager (111) to process the resource request and forward the resource request to a second domain resource manager (122) of the second network domain, to instruct the second domain resource manager (122) to check the availability of the required resources and, if available, to reserve the required resources and return a resource response to the first network domain; and
the request handler (101) is adapted to receive the resource response from first network domain.

24. The mobile device (160) of claim 23, wherein the request handler (101) is adapted to perform operations to discover the second domain resource manager (122) or adapted to instruct the first domain resource manager (111) to perform operations to discover the second domain resource manager.

25. The mobile device (160) of at least one of the claims 22 to 24, wherein the request handler (101) is adapted to perform operations to discover a second domain authentication manager (123) or adapted to instruct the first domain resource manager (111) to perform operations to discover the second domain authentication manager (123).

26. A program having executable instructions which, when executed by computer devices, cause the computer devices to carry out the method steps of any one of claims 1 to 21.

27. A computer readable medium, in which the program of claim 26 is embodied.

28. A computer program product comprising the computer readable medium of claim 27.

## Patentansprüche

1. Ein Verfahren zum Durchführen eines Zwischenbereichs-Handovers eines Kommunikationsweges von einem ersten Netzwerkbereich (110) zu einem zweiten Netzwerkbereich (120), enthaltend:
Übertragen einer Ressourcenanfrage von einem Mobilgerät (160) an den ersten Netzwerkbereich, wobei die Ressourcenanfrage die beim zweiten Netzwerkbereich (120) erforderlichen Kommunikationsressourcen zum Handhaben des Kommunikationsweges festlegt, um den ersten Netzwerkbereich (110) anzuweisen, Informationen über die Verfügbarkeit der erforderlichen Kommunikationsressourcen zu erhalten;
Empfangen einer Ressourcenantwort beim Mobilgerät (160) vom ersten Netzwerkbereich (110), wobei die Ressourcenantwort anzeigt, ob die erforderlichen Kommunikationsressourcen beim zweiten Netzwerkbereich verfügbar sind; und
Beginnen des Handovers vom ersten Netzwerkbereich (110) zum zweiten Netzwerkbereich (120) durch das Mobilgerät, wenn die Ressourcenantwort anzeigt, dass genügend Kommunikationsressourcen beim zweiten Netzwerkbereich verfügbar sind.

2. Das Verfahren nach Anspruch 1, wobei die Ressourcenanfrage die erforderlichen Ressourcen und/oder eine Anzeige der Dienstgüte und/oder einen Identifizierer des zweiten Netzwerkbereichs (120) und/oder einen Identifizierer des Mobilgeräts festlegt.

3. Das Verfahren nach mindestens einem der vorhergehenden Ansprüche, wobei
das Mobilgerät (160) einen ersten Bereichs-Ressourcenmanager des ersten Netzwerkbereichs erkennt und die Ressourcenanfrage an den ersten Bereichs-Ressourcenmanager übermittelt;
der erste Bereichs-Ressourcenmanager (111) die Ressourcenanfrage verarbeitet und die Ressourcenanfrage an einen zweiten Bereichs-Ressourcenmanager des zweiten Netzwerkbereichs übermittelt;
der zweite Bereichs-Ressourcenmanager (122) die Verfügbarkeit der erforderlichen Ressourcen überprüft und, falls verfügbar, die erforderlichen Ressourcen belegt und eine Ressourcenantwort an den ersten Netzwerkbereich zurückgibt; und
der erste Netzwerkbereich (110) die Ressourcenantwort an das Mobilgerät überträgt.

4. Das Verfahren nach Anspruch 3, wobei der erste Bereichs-Ressourcenmanager (111) oder das Mobilgerät (160) Betriebsvorgänge durchführt, um den zweiten Bereichs-Ressourcenmanager zu erkennen.

5. Das Verfahren nach mindestens einem der vorhergehenden Ansprüche, einschließlich
Übertragen einer Authentifizierungsanfrage vom Mobilgerät (160) an den zweiten Netzwerkbereich (120) und Austauschen einer Authentifizierungssignalisierung zwischen dem Mobilgerät (160) und dem zweiten Netzwerkbereich; und
Beginnen des Handovers zum zweiten Netzwerkbereich, wenn die Authentifizierung des Mobilgerätes (160) gelungen ist.

6. Das Verfahren nach Anspruch 5, wobei die Authentifizierungsanfrage und/oder die Authentifizierungssignalisierung über den ersten Netzwerkbereich übertragen wird/werden.

7. Das Verfahren nach Anspruch 5 und/oder 6, wobei die Ressourcenantwort nur dann an das Mobilgerät (160) übertragen wird, wenn die Authentifizierung des Mobilgerätes gelungen ist.

8. Das Verfahren nach mindestens einem der vorhergehenden Ansprüche, einschließlich Bestimmen, ob das Mobilgerät (160) berechtigt ist, die angefragten Kommunikationsressourcen beim zweiten Netzwerkbereich zu benutzen.

9. Das Verfahren nach mindestens einem der Ansprüche 5 bis 8, einschließlich Übertragen der Authentifizierungsanfrage vom Mobilgerät (160) an den ersten Bereichs-Ressourcenmanager, wobei die Authentifizierungsanfrage den ersten Bereichs-Ressourcenmanager (111) anweist, die Authentifizierungsanfrage an einen zweiten Bereichs-Authentifizierungsmanager des zweiten Netzwerkbereichs zu übertragen.

10. Das Verfahren nach mindestens einem der Ansprüche 8 und 9, wobei der erste Bereichs-Ressourcenmanager (111) oder das Mobilgerät (160) Betriebsvorgänge durchführt, um den zweiten Bereichs-Authentifizierungsmanager zu erkennen.

11. Das Verfahren nach mindestens einem der Ansprüche 8 bis 10, einschließlich Empfangen der Identität des zweiten Bereichs-Authentifiizierungsmanagers (123) beim Mobilgerät (160) und der Übertragung der Authentifizierungsanfrage vom Mobilgerät (160) an den zweiten Bereichs-Authentifizierungsmanager (123).

12. Das Verfahren nach mindestens einem der Ansprüche 5 bis 11, einschließlich Übertragen der Authentifizierungsanfrage vom Mobilgerät (160) an einen ersten Bereichs-Ressourcenmanager, wobei die Authentifizierungsanfrage den ersten Bereichs-Ressourcenmanager (111) anweist, einen zweiten Bereichs-Ressourcenmanager (122) zu identifizieren und die Authentifizierungsanfrage an den zweiten Bereichs-Ressourcenmanager zu übermitteln, wobei der zweite Bereichs-Ressourcenmanager (122) die Authentifizierungsanfrage an einen zweiten Bereichs-Ressourcenmanager (123) übermittelt.

13. Das Verfahren nach mindestens einem der vorhergehenden Ansprüche, wobei das Mobilgerät (160) die Ressourcenanfrage an den ersten Netzwerkbereich (110) übermittelt, und der erste Netzwerkbereich eine Authentifizierungsnachricht auf der Grundlage der Ressourcenanfrage erzeugt und selbige an den zweiten Netzwerkbereich übermittelt.

14. Das Verfahren nach mindestens einem der Ansprüche 3 bis 13, wobei der zweite Bereichs-Ressourcenmanager eine Authentifizierungsnachricht auf der Grundlage der Ressourcenanfrage erzeugt und selbige an den zweiten Bereichs-Authentifizierungsmanager (123) übermittelt.

15. Das Verfahren nach mindestens einem der Ansprüche 5 bis 14, wobei die Betriebsvorgänge zur Ressourcenbelegung und zur Authentifizierung des Mobilgeräts (160) bezüglich des zweiten Netzwerkbereichs (120) nacheinander oder gleichzeitig durchgeführt werden.

16. Das Verfahren nach mindestens einem der Ansprüche 5 bis 15, wobei die Authentifizierungsanfrage alle Informationen enthält, die zur Authentifizierung des Mobilgeräts (160) bezüglich des zweiten Netzwerkbereichs (120) notwendig sind, und wobei eine Authentifizierungsantwort vom zweiten Netzwerkbereich (120) an das Mobilgerät (160) in Verbindung mit der Ressourcenanfrage übertragen wird.

17. Das Verfahren nach mindestens einem der vorhergehenden Ansprüche, wobei das Mobilgerät (160) eine Handover-Bestätigung an den zweiten Bereichs-Ressourcenmanager (122) überträgt und mit einem zweiten Bereichs-Authentifizierungsmanager (123) wieder authentifiziert.

18. Das Verfahren nach mindestens einem der vorhergehenden Ansprüche, wobei das Mobilgerät (160) eine Empfangsbestätigungsnachricht an den ersten Netzwerkbereich überträgt, wobei die Empfangsbestätigungsnachricht ein gelungenes Handover zum zweiten Netzwerkbereich anzeigt.

19. Das Verfahren nach mindestens einem der vorhergehenden Ansprüche, wobei das Mobilgerät (160) Wiederauthentifizierungssignalisierung mit dem zweiten Netzwerkbereich (120) nach Beginn des Handovers austauscht.

20. Das Verfahren nach mindestens einem der vorhergehenden Ansprüche, wobei die Wiederauthentifizierungssignalisierung die Übertragung einer Wiederauthentifizierungsnachricht vom Mobilgerät (160) an den zweiten Bereichs-Authentifizierungsmanager (123), direkt oder über den zweiten Bereichs-Ressourcenmanager, enthält.

21. Das Verfahren nach mindestens einem der vorhergehenden Ansprüche, wobei die Wiederauthentifizierungssignalisierung durch den zweiten Bereichs-Ressourcenmanager (122) erzeugt oder in Verbindung mit Ressourcenbelegungssignalisierung zwischen dem Mobilgerät (160) und dem zweiten Bereichs-Ressourcenmanager übertragen wird.

22. Ein Mobilgerät (160) zum Durchführen eines Zwischenbereichs-Handovers eines Kommunikationsweges von einem ersten Netzwerkbereich (110) zu einem zweiten Netzwerkbereich, enthaltend:
einen Anfrage-Handhaber (101) zum Übertragen einer Ressourcenanfrage vom Mobilgerät (160) an den ersten Netzwerkbereich, wobei die Ressourcenanfrage die beim zweiten Netzwerkbereich (120) erforderlichen Kommunikationsressourcen zum Handhaben des Kommunikationswegs festlegt, um den ersten Netzwerkbereich (110) anzuweisen, Informationen über die Verfügbarkeit der erforderlichen Kommunikationsressourcen zu erhalten, und zum Empfangen einer Ressourcenantwort vom ersten Netzwerkbereich (110), wobei die Ressourcenantwort anzeigt, ob die erforderlichen Kommunikationsressourcen beim zweiten Netzwerkbereich verfügbar sind; und
einen Handover-Handhaber zum Beginnen des Handovers vom ersten Netzwerkbereich (110) zum zweiten Netzwerkbereich, wenn die Ressourcenantwort anzeigt, dass genügend Kommunikationsressourcen beim zweiten Netzwerkbereich verfügbar sind.

23. Das Mobilgerät (160) nach Anspruch 22, wobei
der Anfrage-Handhaber (101) ausgelegt ist, einen ersten Bereichs-Ressourcenmanager (111) des ersten Netzwerkbereichs zu erkennen, und die Ressourcenanfrage an den ersten Bereichs-Ressourcenmanager zu übermitteln, wobei die Ressourcenanfrage den ersten Bereichs-Ressourcenmanager (111) anweist, die Ressourcenanfrage zu verarbeiten und die Ressourcenanfrage an einen zweiten Bereichs-Ressourcenmanager (122) des zweiten Netzwerkbereichs zu übermitteln, um den zweiten Bereichs-Ressourenmanager (122) anzuweisen, die Verfügbarkeit der erforderlichen Ressourcen zu überprüfen und, falls verfügbar, die erforderlichen Ressourcen zu belegen und eine Ressourcenantwort an den ersten Netzwerkbereich zurückzugeben; und
der Anfrage-Handhaber (101) ausgelegt ist, die Ressourcenantwort vom ersten Netzwerkbereich zu empfangen.

24. Das Mobilgerät (160) nach Anspruch 23, wobei der Anfrage-Handhaber (101) ausgelegt ist, Betriebsvorgänge durchzuführen, um den zweiten Bereichs-Ressourcenmanager (122) zu erkennen, oder ausgelegt ist, den ersten Bereichs-Ressourcenmanager (111) anzuweisen, Betriebsvorgänge durchzuführen, um den zweiten Bereichs-Ressourcenmanager zu erkennen.

25. Das Mobilgerät (160) nach mindestens einem der Ansprüche 22 bis 24, wobei der Anfrage-Handhaber (101) ausgelegt ist, Betriebsvorgänge durchzuführen, um einen zweiten Bereichs-Authentifizierungsmanager (123) zu erkennen, oder ausgelegt ist, den ersten Bereichs-Ressourcenmanager (111) anzuweisen, Betriebsvorgänge durchzuführen, um den zweiten Bereichs-Authentifizierungsmanager (123) zu erkennen.

26. Ein Programm mit ausführbaren Anweisungen die, wenn sie von Computervorrichtungen ausgeführt werden, veranlassen, dass die Computervorrichtungen die Verfahrensschritte nach irgendeinem der Ansprüche 1 bis 21 durchführen.

27. Ein computerlesbares Medium, in dem das Programm von Anspruch 26 enthalten ist.

28. Ein Computerprogrammprodukt, welches das computerlesbare Medium von Anspruch 27 umfasst.

## Revendications

1. Procédé pour effectuer un transfert inter-domaine d'un chemin de communication depuis un premier domaine de réseau (110) vers un second domaine de réseau (120) incluant les étapes consistant à :
transmettre une demande de ressource depuis un dispositif mobile (160) vers le premier domaine de réseau, la demande de ressource spécifiant des ressources de communication requises au niveau du second domaine de réseau (120) pour traiter le chemin de communication, pour charger le premier domaine de réseau (110) d'obtenir des informations sur la disponibilité des ressources de communication requises ;
recevoir une réponse de ressource au niveau du dispositif mobile (160) du premier domaine de réseau (110) indiquant si les ressources de communication requises sont disponibles au niveau du second domaine de réseau ; et
amorcer le transfert depuis le premier domaine de réseau (110) vers le second domaine de réseau (120) par le dispositif mobile, si la réponse de ressource indique que des ressources de communication suffisantes sont disponibles au niveau du second domaine de réseau.

2. Procédé selon la revendication 1, dans lequel la demande de ressource spécifie au moins une des ressources requises, une indication de qualité de service, un identificateur du second domaine de réseau (120), et un identificateur du dispositif mobile.

3. Procédé selon au moins l'une des revendications précédentes, dans lequel
le dispositif mobile (160) découvre un gestionnaire de ressources de premier domaine du premier domaine de réseau, et fait suivre la demande de ressource au gestionnaire de ressources de premier domaine ;
le gestionnaire de ressources de premier domaine (111) traite la demande de ressource et fait suivre la demande de ressource à un gestionnaire de ressources de second domaine du second domaine de réseau ;
le gestionnaire de ressources de second domaine (122) vérifie la disponibilité des ressources requises et, si disponibles, réserve les ressources requises et renvoie une réponse de ressource au premier domaine de réseau ; et
le premier domaine de réseau (110) transmet la réponse de ressource au dispositif mobile.

4. Procédé selon la revendication 3, dans lequel le gestionnaire de ressources de premier domaine (111) ou le dispositif mobile (160) effectue des opérations pour découvrir le gestionnaire de ressources de second domaine.

5. Procédé selon au moins l'une des revendications précédentes, incluant les étapes consistant à :
transmettre une demande d'identification depuis le dispositif mobile (160) au second domaine de réseau (120) et échanger une signalisation d'authentification entre le dispositif mobile (160) et le second domaine de réseau ; et
amorcer le transfert vers le second domaine de réseau, si le dispositif mobile (160) est authentifié avec succès.

6. Procédé selon la revendication 5, dans lequel au moins une de la demande d'identification et de la signalisation d'authentification est transmise par l'intermédiaire du premier domaine de réseau.

7. Procédé selon au moins l'une des revendications 5 et 6, dans lequel la réponse de ressource est seulement transmise au dispositif mobile (160), si le dispositif mobile est authentifié avec succès.

8. Procédé selon au moins l'une des revendications précédentes, incluant l'étape consistant à déterminer si le dispositif mobile (160) est autorisé à utiliser les ressources de communication demandées au niveau du second domaine de réseau.

9. Procédé selon au moins l'une des revendications 5 à 8, incluant les étapes consistant à transmettre la demande d'identification depuis le dispositif mobile (160) au gestionnaire de ressources de premier domaine, à charger le gestionnaire de ressources de premier domaine (111) de transmettre la demande d'authentification à un gestionnaire d'authentification de second domaine du second domaine de réseau.

10. Procédé selon au moins l'une des revendications 8 et 9, dans lequel le gestionnaire de ressources de premier domaine (111) ou le dispositif mobile (160) effectue des opérations pour découvrir le gestionnaire d'authentification de second domaine.

11. Procédé selon au moins l'une des revendications 8 à 10, incluant les étapes consistant à recevoir l'identité du gestionnaire d'authentification de second domaine (123) au niveau du dispositif mobile (160) et à transmettre la demande d'authentification depuis le dispositif mobile (160) au gestionnaire d'authentification de second domaine (123).

12. Procédé selon au moins l'une des revendications 5 à 11, incluant les étapes consistant à transmettre la demande d'authentification depuis le dispositif mobile (160) à un gestionnaire de ressources de premier domaine, à charger le gestionnaire de ressources de premier domaine (111) d'identifier un gestionnaire de ressources de second domaine (122) et à faire suivre la demande d'authentification au gestionnaire de ressources de second domaine, le gestionnaire de ressources de second domaine (122) faisant suivre la demande d'authentification à un gestionnaire d'authentification de second domaine (123).

13. Procédé selon au moins l'une des revendications précédentes, dans lequel le dispositif mobile (160) transmet la demande de ressource au premier domaine de réseau (110), et le premier domaine de réseau, sur base de la demande de ressource, génère un message d'authentification et fait suivre celui-ci au second domaine de réseau.

14. Procédé selon au moins l'une des revendications 3 à 13, dans lequel le gestionnaire de ressources de second domaine, sur base de la demande de ressource, génère un message d'authentification et le fait suivre au gestionnaire d'authentification de second domaine (123).

15. Procédé selon au moins l'une des revendications 5 à 14, dans lequel les opérations pour la réservation de ressource et l'authentification du dispositif mobile (160) vers le second domaine de réseau (120) sont effectuées successivement ou concurremment.

16. Procédé selon au moins l'une des revendications 5 à 15, dans lequel la demande d'authentification inclut toutes les informations nécessaires pour authentifier le dispositif mobile (160) vers le second domaine de réseau (120) et dans lequel une réponse d'authentification est transmise depuis le second domaine de réseau (120) au dispositif mobile (160) en association avec la réponse de ressource.

17. Procédé selon au moins l'une des revendications précédentes, dans lequel le dispositif mobile (160) transmet une confirmation de transfert au gestionnaire de ressources de second domaine (122) et réauthentifie avec un gestionnaire d'authentification de second domaine (123).

18. Procédé selon au moins l'une des revendications précédentes, dans lequel le dispositif mobile (160) transmet un message de confirmation au premier domaine de réseau, le message de confirmation indiquant un transfert réussi au second domaine de réseau.

19. Procédé selon au moins l'une des revendications précédentes, dans lequel le dispositif mobile (160) échange une signalisation de réauthentification avec le second domaine de réseau (120) après l'amorçage du transfert.

20. Procédé selon au moins l'une des revendications précédentes, dans lequel la signalisation de réauthentification inclut l'étape consistant à transmettre un message de réauthentification depuis le dispositif mobile (160) au gestionnaire d'authentification de second domaine (123), directement ou par l'intermédiaire du gestionnaire de ressources de second domaine.

21. Procédé selon au moins l'une des revendications précédentes, dans lequel la signalisation de réauthentification est générée par le gestionnaire de ressources de second domaine (122) ou est transmise en association avec la signalisation de réservation de ressource entre le dispositif mobile (160) et le gestionnaire de ressources de second domaine.

22. Dispositif mobile (160) pour effectuer un transfert inter-domaine d'un chemin de communication depuis un premier domaine de réseau (110) vers un second domaine de réseau, incluant :
un gestionnaire de demande (101) pour transmettre une demande de ressource depuis le dispositif mobile (160) au premier domaine de réseau, la demande de ressource spécifiant des ressources de communication requises au niveau du second domaine de réseau (120) pour traiter le chemin de communication, pour charger le premier domaine de réseau (110) d'obtenir des informations sur la disponibilité des ressources de communication requises, et pour recevoir une réponse de ressource du premier domaine de réseau (110) indiquant si les ressources de communication requises sont disponibles au niveau du second domaine de réseau ; et
un gestionnaire de transfert pour amorcer le transfert depuis le premier domaine de réseau (110) vers le second domaine de réseau, si la réponse de ressource indique que des ressources de communication suffisantes sont disponibles au niveau du second domaine de réseau.

23. Dispositif mobile (160) selon la revendication 22, dans lequel
le gestionnaire de demande (101) est conçu pour découvrir un gestionnaire de ressources de premier domaine (111) du premier domaine de réseau, et pour faire suivre la demande de ressource au gestionnaire de ressources de premier domaine, chargeant le gestionnaire de ressources de premier domaine (111) de traiter la demande de ressource et de faire suivre la demande de ressource à un gestionnaire de ressources de second domaine (122) du second domaine de réseau, pour charger le gestionnaire de ressources de second domaine (122) de vérifier la disponibilité des ressources requises et, si disponibles, de réserver les ressources requises et de renvoyer une réponse de ressource au premier domaine de réseau ; et
le gestionnaire de demande (101) est conçu pour recevoir la réponse de ressource du premier domaine de réseau.

24. Dispositif mobile (160) selon la revendication 23, dans lequel le gestionnaire de demande (101) est conçu pour effectuer des opérations pour découvrir le gestionnaire de ressources de second domaine (122) ou conçu pour charger le gestionnaire de ressources de premier domaine (111) d'effectuer des opérations pour découvrir le gestionnaire de ressources de second domaine.

25. Dispositif mobile (160) selon au moins l'une des revendications 22 à 24, dans lequel le gestionnaire de demande (101) est conçu pour effectuer des opérations pour découvrir un gestionnaire d'authentification de second domaine (123) ou conçu pour charger le gestionnaire de ressources de premier domaine (111) d'effectuer des opérations pour découvrir le gestionnaire d'authentification de second domaine (123).

26. Programme ayant des instructions exécutables qui, lorsqu' exécutées par des dispositifs d'ordinateur, amènent les dispositifs d'ordinateur à effectuer les étapes de procédé de l'une quelconque des revendications 1 à 21.

27. Support lisible par ordinateur, dans lequel le programme de la revendication 26 est incorporé.

28. Produit formant programme d'ordinateur comprenant le support lisible par ordinateur de la revendication 27.
